# EUROPÄISCHE PATENTSCHRIFT

(11) **EP 2 179 639 B1**
(45) Veröffentlichungstag und Bekanntmachung des Hinweises auf die Patenterteilung: **07.11.2012**
(21) Anmeldenummer: 09011432.3
(22) Anmeldetag: 07.09.2009
(51) Int. Cl.: A01D 57/02, F16C 17/10

(54) **Lageranordnung für einen Zinkenträger an einer Haspel einer Erntemaschine**
Bearing assembly for a tine holder on a reel of a harvesting machine
Assemblage de palier pour un support de dent sur une bobineuse d'une moissonneuse

(30) Priorität: 21.10.2008 DE 102008052581
(43) Veröffentlichungstag der Anmeldung: 28.04.2010
(73) Patentinhaber: Gebr. Schumacher Gerätebaugesellschaft mbH, 57612 Eichelhardt (DE)
(72) Erfinder: Höller, Frank, 57629 Stein Winngert (DE); Otto, Sascha, 57612 Racksen (DE)
(74) Vertreter: Müller, Thomas Michael

(56) Entgegenhaltungen:
- EP-A1- 1 716 740
- DD-A1- 60 171
- US-A- 3 703 060
- US-A- 5 456 536

## Beschreibung

Die Erfindung betrifft eine Lageranordnung für einen Zinkenträger an einer Haspel einer Erntemaschine, umfassend ein erstes Lagerelement in Form einer Lagerbuchse mit einer Lagerbohrung zur drehbaren Lagerung eines Zinkenträges um eine Drehachse und mit Befestigungsmitteln zum Befestigen der Lagerbuchse an einem Tragelement einer Haspel, sowie ein zweites Lagerelement in Form eines Lagerrings, der auf dem Zinkenträger fixierbar ist, wobei der Lagerring geteilt ist und einen ersten Ringabschnitt und einen zweiten Ringabschnitt aufweist, die lösbar miteinander verbunden sind, und wobei die beiden Lagerelemente drehbar zueinander gehalten und axial gegeneinander abgestützt sind.

Eine solche Lageranordnung ist aus der EP 1 716 740 A1 bekannt.

In der Praxis werden zwei Grundtypen von Haspeln an Mähwerken für Erntemaschinen eingesetzt. Es gibt einerseits die einfache Paddelhaspel, die nur mit zinkenlosen Paddelleisten das Erntegut der Maschine - in der Regel einem Schneidwerk - zuführt und zum anderen die Zinkenhaspel, an deren Paddelrohren oder -leisten zusätzliche Stahl- oder Kunststoffzinken befestigt sind.

Die Zinkenhaspel hat sich bei Mähdreschern gegenüber der einfachen Paddelhaspel durchgesetzt, weil nur diese in der Lage ist, auch Lagergetreide oder verwirbeltes Erntegut sicher zu verarbeiten. Im Gegensatz zur einfachen Paddelhaspel aber, bei der die Paddelleisten starr an radialen Trägersternen befestigt sind, welche an einer Mittelachse befestigt sind, die drehbar an Seitenholmen über dem Schneid- bzw. Aufnahmebalken einer Erntemaschine in bekannter Weise gelagert ist, müssen die mit Zinken bestückten Leisten oder Rohre als Zinkenträger an den radialen Trägersternen drehbar gelagert sein. Hierdurch soll erreicht werden, daß die Zinken immer etwa senkrecht zum Boden gerichtet arbeiten. Dazu wird in den meisten Fällen ein radial exzentrisch zur Achse und damit auch exzentrisch zu den Trägersternen angeordneter Steuerstern herangezogen. Dieser ist in der Mitte mit einer kreisrunden Steuerlaufbahn versehen, in der ein oder mehrere Führungslaufrollen, die mit entsprechenden Verbindungsmitteln an den Seitenholmen gelagert sind, abrollen. Die Zinkenträger sind am Ende mit kleinen Kurbeln versehen, deren Kurbelzapfen jeweils drehbar am Steuerstern gelagert sind. Der Steuerstern dreht sich dabei in gleicher Richtung und mit gleicher Drehzahl wie der Haltestern. Dadurch, daß sich der Steuerstern gegenüber den Haltesternen exzentrisch dreht, werden auch die Kurbelenden der Zinkenträgerleisten bzw. der Zinkenträgerrohre bei jeder Haspelumdrehung ebenfalls einmal gedreht, so daß die Zinken immer in die gleiche Richtung zeigen, die dabei in den meisten Fällen gerade nach unten gerichtet sind.

Derartige Haspelsteuerungen sind zum Beispiel aus der DE 100 29 372 C2 bekannt.

Die Zinkenträger werden hierbei über Lageranordnungen drehbar an den Tragelementen gelagert. Da Erntemaschinen auch in hügligem Gelände eingesetzt werden, müssen die Zinkenträger in Seitenhanglage axial in Richtung der Drehachsen gegen die Tragelemente abgestützt werden.

Hierzu ist bekannt, dass Ringe auf die Zinkenträger aufgeschoben werden, wobei jeweils zwei Ringe beidseitig einer Lageranordnung zur Lagerung eines Zinkenträgers mit diesem fixiert sind, so dass sich der Zinkenträger über die Ringe axial gegen die Lageranordnung abstützen kann. Aus der DD 60 171 ist eine Lageranordnung der eingangs genannten Art bekannt, bei der der Zinkenträger zwischen einer Lagerhälfte, die mit einem Haspelarm verbunden ist, und einem ebenfalls mit dem Haspelarm verbundenen Lagerbügel drehbar angeordnet ist. Die Lagerhälfte weist eine Nut auf, die teilweise um die Drehachse des Zinkenträgers verläuft. Der Lagerbügel weist darüber hinaus eine Öffnung in Form eines Schlitzes auf, die ebenfalls teilweise um die Drehachse verläuft. Auf dem Zinkenträger ist ein Ring aufgepresst oder aufgeschrumpft, so dass dieser auf dem Zinkenträger fixiert ist, wobei der Ring in die Nut der Lagerhälfte und in die Öffnung des Lagerbügels eingreift und in diesen drehbar ist sowie sich axial gegen diese abstützt.

Nachteil bei den bekannten Lageranordnungen ist jedoch, dass die Ringe vor der Montage der Zinken auf die Zinkenträger aufgeschoben werden müssen und in die Bereiche der Lageranordnungen geschoben werden müssen. Dies führt zu einer zeitaufwendigen Montage und macht den Austausch der Ringe bei Verschleiß sehr aufwendig.

Aufgabe der vorliegenden Erfindung ist es daher, eine Lageranordnung der eingangsgenannten Art bereitzustellen, die einfach aufgebaut ist und leicht montiert werden kann.

Die Aufgabe wird erfindungsgemäß durch eine Lageranordnung gemäß Anspruch 1 gelöst. Bevorzugte Ausführungsbeispiele ergeben sich aus den Unteransprüchen.

Vorteil der erfindungsgemäßen Lageranordnung ist, daß der Zinkenträger mit den Zinken vormontiert werden kann, bevor dieser an der Haspel befestigt wird. Der Lagerring kann nachträglich aufgrund dessen, dass er zweigeteilt ist, auf dem Zinkenträger befestigt werden.

Hierzu werden die beiden Ringabschnitte in radialer Richtung auf den Zinkenträger aufgesteckt und miteinander verbunden.

Hierzu weist eines der Lagerelemente eine umlaufende Nut auf und das andere Lagerelement einen umlaufenden Kragen, wobei der Kragen in der Nut drehbar aufgenommen und axial abgestützt ist.

Die Lagerbuchse weist einen Hülsenabschnitt auf, an dem der Kragen ausgebildet ist, wobei der Kragen radial nach außen vorsteht. Der Lagerring weist die Nut in Form einer Innenumfangsnut auf. Somit kann zunächst die Lagerbüchse an dem Tragelement befestigt werden. Nachträglich kann dann der Lagerring bestehend aus den beiden Lagerabschnitten auf den Zinkenträger montiert werden, wobei die Ringabschnitte mit der Nut auf den Hülsenabschnitt der Lagerbuchse von außen aufmontiert werden.

Für eine einfache Montage sind die Ringabschnitte miteinander verschraubt, und werden hierdurch vorzugsweise auf den Zinkenträger aufgeklemmt und fixiert.

Die Lagerbuchse ist vorzugsweise in ein erstes Buchsensegment und ein zweites Buchsensegment geteilt, wobei sich die Buchsensegmente jeweils über einen Teil des Umfangs der Lagerbohrung erstrecken. Somit kann die Lagerbuchse ebenfalls nach Montage der Zinken auf dem Zinkenträger montiert werden und gegebenenfalls auch in Wartungsfällen demontiert werden.

Die Buchsensegmente können sich, bezogen auf die Drehachse, über unterschiedliche Winkel erstrecken. Vorzugsweise sind die Buchsensegmente lösbar miteinander verbunden.

Die Lagerbuchse weist vorzugsweise einen Flansch auf, mit dem die Lagerbuchse an dem Tragelement der Haspel befestigbar ist. Hierbei kann der Flansch Bohrungen aufweisen, um die Lagerbuchse mit dem Tragelement zu verschrauben.

Ein bevorzugtes Ausführungsbeispiel der erfindungsgemäßen Lageranordnung ist im folgenden anhand der Zeichnungen näher erläutert. Hierin zeigt:
Figur 1 eine perspektivische Darstellung einer Haspel,
Figur 2 eine perspektivische Darstellung der erfindungsgemäßen Lageranordnung,
Figur 3 einen Längsschnitt durch eine erfindungsgemäße Lageranordnung und
Figur 4 einen Querschnitt entlang der Schnittlinier IV-IV gemäß Figur 3.

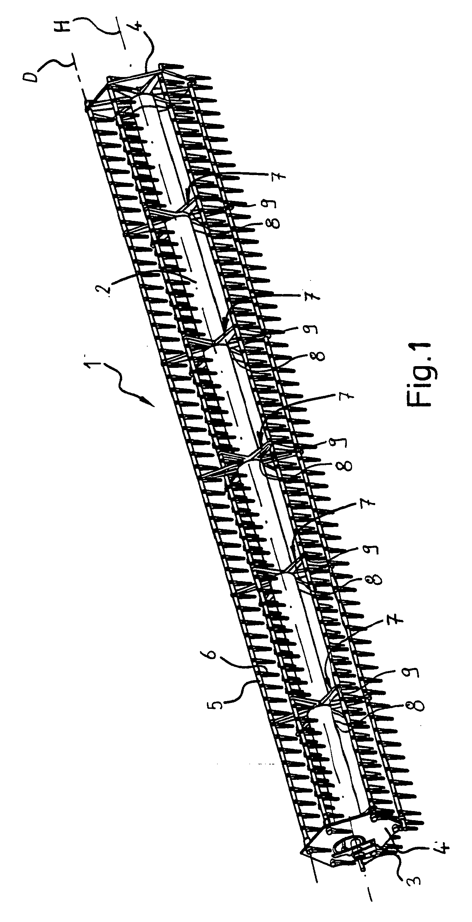

Aus Figur 1 ist eine Haspel 1 erkennbar, die ein Zentralrohr 2 umfasst, das an seinen Enden Drehzapfen 3 aufweist. Über die Drehzapfen 3 ist das Zentralrohr 2 in einer hier nicht dargestellten Aufnahme eines Schneidwerks einer Erntemaschine um eine Haspelachse H drehbar gelagert und angetrieben. An den Enden des Zentralrohrs 2 sind Stellanordnungen 4 vorgesehen, über die in bekannter Weise Zinkenträger 5 jeweils um eine Drehachse D drehbar angetrieben werden. Die Zinkenträger 5 sind rohrförmig gestaltet und verlaufen parallel zur Haspelachse H. Im vorliegenden Fall sind insgesamt sechs Zinkenträger 5 vorgesehen, die gleichmäßig um die Haspelachse H verteilt angeordnet sind. An den Zinkenträgern 5 sind jeweils eine Vielzahl von Zinken 6 montiert, die radial zur jeweiligen Drehachse D vom Zinkenträger 5 vorstehen, wobei alle Zinken 6 eines Zinkenträgers 5 identisch ausgerichtet sind. Die Stellanordnung 4 treibt die Zinkenträger 5 derart an, dass die Zinken 6 immer in etwa vertikal nach unten gerichtet sind. Grundsätzlich sind jedoch auch andere Ausrichtungen denkbar, unter anderem auch unterschiedliche Ausrichtungen der einzelnen Zinkenträger 5 zueinander.

Damit die Zinkenträger 5 nicht durchbiegen, sind mehrere Tragelemente 7 in Form von Haltesternen vorgesehen, die mit dem Zentralrohr 2 fest verbunden sind. Die Tragelemente 7 weisen je Zinkenträger 5 einen Tragarm 8 auf, der radial zur Drehachse D verläuft. An den freien Enden der Tragarme 8 ist jeweils eine Lageranordnung 9 vorgesehen, mittels derer der jeweilige Zinkenträger 5 am Tragarm 8 drehgelagert ist.

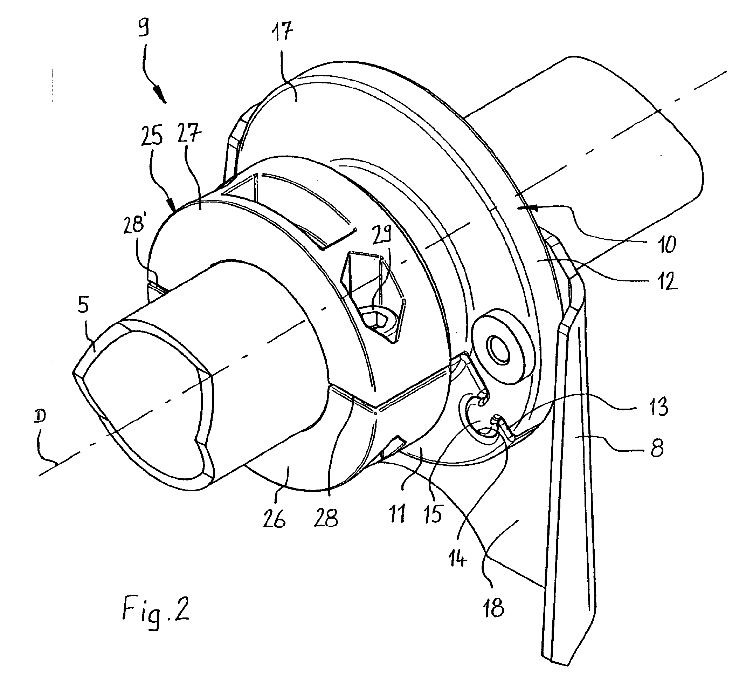

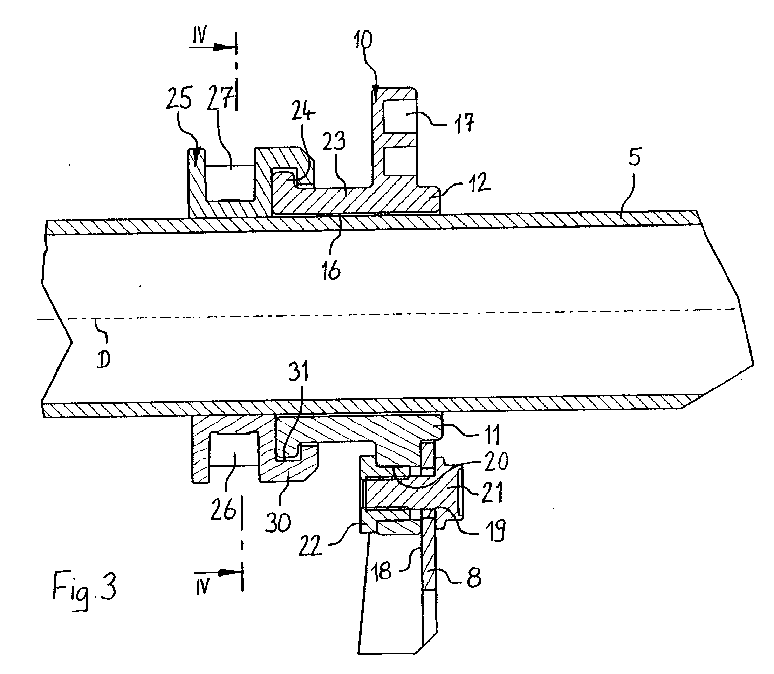

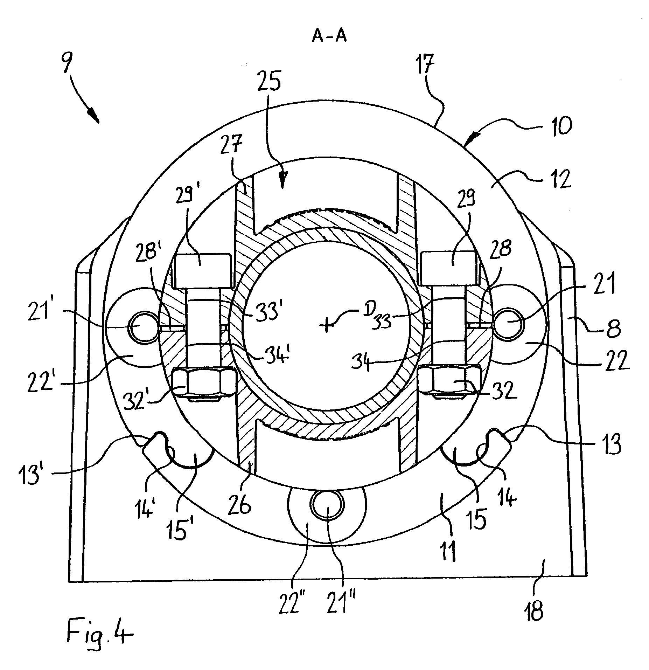

Die Figuren 2 bis 4 zeigen eine erfindungsgemäße Lageranordnung in unterschiedlichen Ansichten und werden im folgenden zusammen beschrieben.

Die Lageranordnung 9 umfasst eine Lagerbuchse 10, mittels derer der Zinkenträger 5 im vorliegenden Fall in Form eines Rohres drehgelagert wird. Die Lagerbuchse 10 umfasst ein erstes Buchsensegment 11 und ein zweites Buchsensegment 12, die zur Lagerbuchse 10 zusammengesetzt sind. Die Buchsensegmente 11, 12 erstrecken sich jeweils über ein Teil des Umfangs um die Drehachse D. Im zusammengesetzten Zustand bilden die Buchsensegmente 11, 12 zwei Trennfugen 13, 13', wobei jede Trennfuge in etwa auf einer Ebene angeordnet ist, die die Drehachse D enthält, und wobei die Ebenen winklig zueinander angeordnet sind. Grundsätzlich können die beiden Trennfugen 13, 13' jedoch auch auf einer gemeinsamen Ebene angeordnet sein. Im Bereich der Trennfugen 13, 13' weist das erste Buchsensegment 11 jeweils eine hinterschnittene Befestigungsausnehmung 14, 14' auf, in die ein entsprechend gestalteter hinterschnittener Befestigungsvorsprung 15, 15' des zweiten Buchsensegments 12 eingreift, so dass die beiden Buchsensegmente 11, 12 miteinander verbunden und vormontiert werden können. Grundsätzlich sind jedoch auch andere Befestigungsmittel wie zum Beispiel eine Schraubverbindung, zum Befestigen der beiden Buchsensegmente 11, 12 miteinander denkbar.

Die Lagerbuchse 12 bildet eine Lagerbohrung 16, die zur Drehachse D zentriert ist und als Durchgangsbohrung gestaltet ist. Die Lagerbohrung 16 nimmt den Zinkenträger 5 in Form eines Rohres auf und dient als Radiallager.

Die Lagerbuchse 10 weist ferner einen Flansch 17 auf, der in radialer Richtung umlaufend angeordnet ist und nach außen vorsteht. Über den Flansch 17 ist die Lagerbuchse 10 mit dem Tragarm 8 verbunden. Der Tragarm 8 ist als umgeformtes Blechteil gestaltet und weist eine Seitenfläche 18 auf, zu der der Flansch 17 in Anlage ist. In dem Tragarm 8 sind Befestigungsbohrungen 19 vorgesehen, die mit Befestigungsbohrungen 20 im Flansch 17 der Lagerbuchse 10 fluchten. Durch die Befestigungsbohrungen 19, 20 sind Befestigungsschrauben 21 hindurchgeführt und mit Befestigungsmuttern 22 gesichert, um die Lagerbuchse 10 lösbar am Tragarm 8 zu befestigen.

Die Lagerbuchse 10 umfasst einen Hülsenabschnitt 23, der an einem axialen Ende einen umlaufenden Kragen 24 bildet, der radial nach außen vorsteht.

Auf dem Zinkenträger 5 ist ein Lagerring 25 fixiert, der zweigeteilt ist und einen ersten Ringabschnitt 26, und einen zweiten Ringabschnitt 27 aufweist. Im montierten Zustand bilden die beiden Ringabschnitte 26, 27 Trennfugen 28, 28', die im vorliegenden Fall diametral gegenüberliegend angeordnet sind und jeweils auf einer Ebenen liegen, die die Drehachse D enthält. Über Befestigungsschrauben 29, 29' und Befestigungsmuttern 32. 32' sind die beiden Ringabschnitte 26, 27 miteinander verschraubt und werden auf dem Zinkenträger 5 verspannt. Die Befestigungsschrauben 29 sind jeweils durch Bohrungen 33, 33'; 34, 34' der Ringabschnitte 26, 27 hindurchgesteckt, die durch die Trennfugen 28, 28' hindurchführen.

Der Lagerring 25 ist seitlich zur Lagerbuchse 10 angeordnet und weist einen Hülsenansatz 30 auf, der der Lagerbuchse 10 zugewandt ist. Der Hülsenansatz 30 bildet eine Nut in Form von einer Innenumfangsnut 31, die den Kragen 24 des Hülsenabschnitts 23 der Lagerbuchse 10 aufnimmt. Hierbei ist die Innenumfangsnut 31 derart ausgestaltet, dass der Kragen 24 axial gegen den Hülsenansatz 30 in beide Richtungen abgestützt ist und sich in dieser drehen kann. Hierzu ist ein Spiel zwischen dem Kragen 24 und dem die Innenumfangsnut 31 bildenden Hülsenansatz 30 vorgesehen.

Dadurch, dass der Lagerring 25 zweigeteilt ist, können die beiden Ringabschnitte 26, 27 von diametral gegenüberliegenden Seiten des Zinkenträgers 5 auf diesen aufgesetzt werden und miteinander verschraubt werden. Durch die Verbindung der beiden Ringabschnitte 26, 27 wird im vorliegenden Fall der Lagerring 25 auch direkt auf dem Zinkenträger 5 verspannt. Grundsätzlich sind jedoch auch andere Befestigungsmittel zum Fixieren des Lagerrings 25 auf dem Zinkenträger 5 vorstellbar, wie beispielsweise separate Verschraubungen. Somit kann der Lagering 25 montiert werden, ohne dass dieser auf den Zinkenträger 5 seitlich aufgeschoben werden muss, so dass insbesondere in Wartungsfällen ein demontieren der Zinken nicht erforderlich ist. Gleiches gilt für die Lagerbuchse 10, die im vorliegenden Fall ebenfalls zweigeteilt ist, so dass die einzelnen Buchsensegmente 11, 12 in radialer Richtung zur Drehachse D auf den Zinkenträger 5 aufgesetzt werden können. Im vorliegenden Fall werden dann die Buchsensegmente 11, 12 zunächst axialversetzt zueinander auf den Zinkenträger aufgesetzt und dann in axialer Richtung zueinander verschoben, so dass der Befestigungsvorsprung 15 in die Befestigungsausnehmung 14 eingeschoben wird.

Grundsätzlich umfasst die zweigeteilte Ausnehmungsform des Lagerrings 25 und der Lagerbuchse 10 auch Lösungen, bei denen die Ringabschnitte 26, 27 oder die Buchsensegmente 11, 12 an einer Stelle gelenkig miteinander verbunden sind, so dass diese auseinander geklappt werden können.

Bezugszeichenliste
- 1: Haspel
- 2: Zentralrohr
- 3: Drehzapfen
- 4: Stellanordnung
- 5: Zinkenträger
- 6: Zinken
- 7: Tragelement
- 8: Tragarm
- 9: Lageranordnung
- 10: Lagerbuchse
- 11: erstes Buchsensegment
- 12: zweites Buchsensegment
- 13: Trennfuge
- 14, 14': Befestigungsausnehmung
- 15, 15': Befestigungsvorsprung
- 16: Lagerbohrung
- 17: Flansch
- 18: Seitenfläche
- 19: Befestigungsbohrung
- 20: Befestigungsbohrung
- 21, 21', 21": Befestigungsschraube
- 22, 22', 22": Befestigungsmutter
- 23: Hülsenabschnitt
- 24: Kragen
- 25: Lagerring
- 26: erster Ringabschnitt
- 27: zweiter Ringabschnitt
- 28, 28': Trennfuge
- 29, 29': Befestigungsschrauben
- 30: Hülsenansatz
- 31: Innenumfangsnut
- 32, 32': Befestigungsmutter
- 33, 33': Bohrung
- 34, 34': Bohrung

- D: Drehachse
- H: Haspelachse

## Patentansprüche

1. Lageranordnung (9) für einen Zinkenträger (5) an einer Haspel (1) einer Erntemaschine, umfassend
ein erstes Lagerelement in Form einer Lagerbuchse (10) mit einer Lagerbohrung (16) zur drehbaren Lagerung eines Zinkenträges (5) um eine Drehachse (D) und mit Befestigungsmitteln (17) zum Befestigen der Lagerbuchse (10) an einem Tragelement (7) einer Haspel (1), sowie
ein zweites Lagerelement in Form eines Lagerrings (25), der auf dem Zinkenträger (5) fixierbar ist, wobei der Lagerring (25) geteilt ist und einen ersten Ringabschnitt (26) und einen zweiten Ringabschnitt (27) aufweist, die lösbar miteinander verbunden sind, und
wobei die beiden Lagerelemente (10, 25) drehbar zueinander gehalten und axial gegeneinander abgestützt sind,
**dadurch gekennzeichnet,**
**dass** die Lagerbuchse (10) einen Hülsenabschnitt (23) aufweist, an dem ein Kragen (24) ausgebildet ist, wobei der Kragen (24) radial nach außen vorsteht,
und
**dass** der Lagerring (25) eine Nut in Form einer Innenumfangsnut (31) aufweist, wobei der Kragen (24) in der Nut (31) drehbar aufgenommen und axial abgestützt ist.

2. Lageranordnung nach Anspruch 1,
**dadurch gekennzeichnet,**
**dass** die Ringabschnitte (26, 27) miteinander verschraubt sind.

3. Lageranordnung nach einem der vorangehenden Ansprüche,
**dadurch gekennzeichnet,**
**dass** der Lagerring (25) auf den Zinkenträger (5) aufklemmbar ist.

4. Lageranordnung nach einem der vorangehenden Ansprüche,
**dadurch gekennzeichnet,**
**dass** die Lagerbuchse (10) in ein erstes Buchsensegment (11) und ein zweites Buchsensegment (12) geteilt ist, wobei sich die Buchsensegmente (11, 12) jeweils über einen Teil des Umfangs der Lagerbohrung (16) erstrecken.

5. Lageranordnung nach Anspruch 4,
**dadurch gekennzeichnet,**
**dass** sich die Buchsensegmente (11, 12), bezogen auf die Drehachse (D), über unterschiedliche Winkel erstrecken.

6. Lageranordnung nach einem der Ansprüche 4 oder 5,
**dadurch gekennzeichnet,**
**dass** die beiden Buchsensegmente (11, 12) lösbar miteinander verbunden sind.

7. Lageranordnung nach einem der vorangehenden Ansprüche,
**dadurch gekennzeichnet,**
**dass** die Lagerbuchse (10) einen Flansch (17) aufweist, mit dem die Lagerbuchse (10) an dem Tragelement (7) der Haspel (1) befestigbar ist.

## Claims

1. Bearing arrangement (9) for a tine carrier (5) on a reel (1) of a harvesting machine comprising
a first bearing element in form of a bearing bushing (10) with a bearing bore (16) for the rotatable support of a tine carrier (5) around a rotational axis (D) and with attachment means (17) for attaching the bearing bushing (10) on a support element (7) of a reel (1), as well as
a second bearing element in form of a bearing ring (25), which can be fixed on the tine carrier (5), wherein the bearing ring (25) is split and has a first ring portion (26) and a second ring portion (27), which are detachably connected to each other, and
wherein the two bearing elements (10, 25) are rotatably held relative to each other and are supported axially on each other,
**characterised in**
**that** the bearing bushing (10) has a sleeve portion (23), on which a collar (24) is formed, wherein the collar (24) projects radially outwardly, and
**that** the bearing ring (25) has a groove in form of an inner circumferential groove (31), wherein the collar (24) is rotatably accommodated and axially supported in the groove (31).

2. Bearing arrangement according to claim 1,
**characterised in**
**that** the ring portions (26, 27) are screwed to each other.

3. Bearing arrangement according to one of the preceding claims, **characterised in**
**that** the bearing ring (25) can be clamped onto the tine carrier (5).

4. Bearing arrangement according to one of the preceding claims, **characterised in**
**that** the bearing bushing (10) is split into a first bushing segment (11) and a second bushing segment (12), wherein the bushing segments (11, 12) extend, respectively, along a part of the circumference of the bearing bore (16).

5. Bearing arrangement according to claim 4,
**characterised in**
**that** the bushing segments (11, 12) extend relative to the rotational axis (D) along different angles.

6. Bearing arrangement according to one of claims 4 or 5,
**characterised in**
**that** the two bushing segments (11, 12) are detachably connected to each other.

7. Bearing arrangement according to one of the preceding claims, **characterised in**
**that** the bearing bushing (10) has a flange (17), with which the bearing bushing (10) is attachable on the support element (7) of the reel (1).

## Revendications

1. Assemblage de palier (9) pour un support de dent (5) sur une bobineuse (1) d'une moissonneuse, comprenant un premier élément de palier sous la forme d'un coussinet de palier (10) avec un alésage de palier (16) en vue du positionnement rotatif d'un support de dent (5) autour d'un axe de rotation (D) et comportant des moyens de fixation (17) pour fixer le coussinet de palier (10) sur un élément de support (7) d'une bobineuse (1), ainsi que
un deuxième élément de palier sous la forme d'une cage de palier (25), qui peut être fixée sur le support de dent (5), dans lequel la cage de palier (25) est divisée et présente une première portion annulaire (26) et une deuxième portion annulaire (27), qui sont reliées l'une à l'autre de manière amovible, et
dans lequel les deux éléments de palier (10, 25) sont maintenus rotativement l'un par rapport à l'autre et sont appuyés l'un contre l'autre axialement, **caractérisé en ce que**
le coussinet de palier (10) présente une portion de manchon (23), sur laquelle un collier (24) est réalisé, dans lequel le collier (24) dépasse en saillie radialement vers l'extérieur, et
**en ce que** le coussinet de palier (25) présente une rainure sous la forme d'une rainure circonférentielle intérieure (31), dans lequel le collier (24) est renfermé rotativement et appuyé axialement dans la rainure (31).

2. Assemblage de palier selon la revendication 1, **caractérisé en ce que** les portions annulaires (26, 27) sont vissées l'une à l'autre.

3. Assemblage de palier selon une des revendications précédentes, **caractérisé en ce que** la cage de palier (25) peut être fixée par pinces sur le support de dent (5).

4. Assemblage de palier selon une des revendications précédentes, **caractérisé en ce que** le coussinet de palier (10) est divisé en un premier segment de coussinet (11) et un deuxième segment de coussinet (12), dans lequel les segments de coussinet (11, 12) s'étendent respectivement sur une partie de la circonférence de l'alésage de palier (16).

5. Assemblage de palier selon la revendication 4, **caractérisé en ce que** les segments de coussinet (11, 12) s'étendent sur des angles différents, par rapport à l'axe de rotation (D).

6. Assemblage de palier selon une des revendications 4 ou 5, **caractérisé en ce que** les deux segments de coussinet (11, 12) sont reliés l'un à l'autre de manière amovible.

7. Assemblage de palier selon une des revendications précédentes, **caractérisé en ce que** le coussinet de palier (10) présente une bride (17), avec laquelle le coussinet de palier (10) peut être fixé sur l'élément de support (7) de la bobineuse (1).
